# EUROPEAN PATENT APPLICATION

(11) **EP 4 124 231 A1**
(43) Date of publication of application: **01.02.2023**
(21) Application number: 22185601.6
(22) Date of filing: 19.07.2022
(51) Int. Cl.: A01D 34/82

(54) **WALKING WORK APPARATUS**

(30) Priority: 29.07.2021 CN 202110866257
(71) Applicant: Nanjing Chervon Industry Co., Ltd., Nanjing, Jiangsu 211106 (CN)
(72) Inventor: FU, Xiangqing, Nanjing, Jiangsu (CN); CHEN, Lian, Nanjing, Jiangsu (CN)
(74) Representative: Sun, Yiming

(57) **Abstract**

A walking work apparatus (500) includes a body (110), a walking wheel set (120), a function assembly, a drive motor (502) and a handle (200). The handle (200) is connected to the body (120) and configured to push the body (120) to walk. The handle (200) includes a hand grip, and a multi-connecting rod assembly. The hand grip is configured to be held by a user. The multi-connecting rod assembly connects the hand grip and the body (120). The multi-connecting rod assembly includes at least a first connecting rod (221), a second connecting rod (222) and a rotary device connecting the first connecting rod (221) and the second connecting rod (222). The switch (224) is configured to be operated to a lock position and an unlocked position.

## Description

### BACKGROUND

Outdoor walking apparatuses are used for outdoor work. For example, a hand-push mower is widely used as a garden tool in fields such as mowing lawns and vegetation. The hand-push mower is provided with a handle for a user to push the machine forward. The structure of the handle results in a large overall size of the hand-push mower, not conducive to the storage and transportation of the hand-push mower. Handles of some hand-push mowers can be folded, but the foldable structure is not flexible enough to facilitate the operation of a user.

### SUMMARY

The main object of the present disclosure is to provide a walking work apparatus. The handle of the outdoor walking work apparatus can be flexibly folded to facilitate the operation of a user.

To achieve the preceding main object, the present disclosure provides a walking work apparatus. The walking work apparatus includes a body, a walking wheel set, a function assembly, a drive motor and a handle. The walking wheel set includes a walking wheel supporting the body. The function assembly is configured to implement the function of the walking work apparatus. The drive motor is configured to drive the function assembly to operate. The handle is connected to the body and configured to push the body to walk. The handle includes a hand grip, a multi-connecting rod assembly and a switch. The hand grip is configured to be held by a user. The multi-connecting rod assembly connects the hand grip and the body. Moreover, the multi-connecting rod assembly includes at least a first connecting rod, a second connecting rod and a rotary device connecting the first connecting rod and the second connecting rod. The switch is configured to be operated to a lock position and an unlocked position. When the switch is operated to the lock position, the first connecting rod is securely connected to the second connecting rod. Moreover, when the switch is operated to the unlocked position, the first connecting rod and the second connecting rod are rotatable relative to each other through the rotary device.

In some embodiments, the multi-connecting rod assembly includes four rotary devices.

In some embodiments, at least two rotary devices are rotatable relative to the body to change the position of the rotary devices relative to the body.

In some embodiments, the walking work apparatus further includes a lock member. The lock member is configured to lock the switch in the lock position.

In some embodiments, the handle includes a connection member. The connection member connects the switch and the second connecting rod.

In some embodiments, when the switch is in the lock position, the connection member abuts the second connecting rod to stop the rotary device from rotating. Moreover, when the switch is in the unlocked position, the connection member releases the rotary device from being stopped.

In some embodiments, the first connecting rod is connected to the hand grip. Moreover, the first connecting rod connects the second connecting rod and the hand grip.

In some embodiments, the first connecting rod includes two connecting rods connecting two ends of the hand grip.

In some embodiments, a first plane is defined to be parallel to the two connecting rods. When the switch is in the unlocked position, the connecting rod mechanism is configured to rotate to a folded state in which the included angle between the first plane and the bottom surface of the body is greater than or equal to 0 degrees and less than or equal to 30 degrees.

In some embodiments, the included angle between the first connecting rod and the second connecting rod is greater than or equal to 5 degrees and less than or equal to 175 degrees.

In some embodiments, the included angle between the first connecting rod and the second connecting rod is greater than or equal to 15 degrees and less than or equal to 160 degrees.

In some embodiments, the handle is configured to be switched to an unfolded state and a folded state. When the handle is in the unfolded state, the distance between the hand grip and the bottom surface of the body is greater than or equal to 800 mm and less than or equal to 1200 mm.

In some embodiments, when the handle is in the folded state, the distance between the hand grip and the highest point of the body is less than or equal to 300 mm.

In some embodiments, the multi-connecting rod assembly includes a first connecting rod, a second connecting rod, a third connecting rod and a fourth connecting rod.

In some embodiments, the handle is configured to be telescopic.

The present disclosure further provides a walking work apparatus. The walking work apparatus includes a body, a walking wheel set, a function assembly, a drive motor and a handle. The walking wheel set includes a walking wheel supporting the body. The function assembly is configured to implement the function of the walking work apparatus. The drive motor is configured to drive the function assembly to operate. The handle is connected to the body and configured to push the body to walk. The handle includes a hand grip, a multi-connecting rod assembly and a switch. The hand grip is configured to be held by a user. The multi-connecting rod assembly connects the hand grip and the body. Moreover, the multi-connecting rod assembly includes at least a first connecting rod, a second connecting rod and a rotary device connecting the first connecting rod and the second connecting rod. The switch has a lock state and an unlocked state. When the switch is in the lock state, the first connecting rod is fixed relative to the second connecting rod. Moreover, when the switch is in the unlocked state, the first connecting rod is movable relative to the second connecting rod.

The present disclosure further provides a hand-push lawn care vehicle. The hand-push lawn care vehicle includes a body, a walking wheel set, a mowing assembly, a drive motor and a handle. The walking wheel set includes a walking wheel supporting the body. The mowing assembly includes a mowing element for mowing. The drive motor is configured to drive the mowing assembly to perform mowing. The handle is connected to the body and configured to push the body to walk. The handle includes a hand grip, a multi-connecting rod assembly and a switch. The hand grip is configured to be held. The multi-connecting rod assembly connects the hand grip and the body. The multi-connecting rod assembly includes at least a first connecting rod, a second connecting rod and a rotary device connecting the first connecting rod and the second connecting rod. The switch is configured to be operated to a lock position and an unlocked position. When the switch is operated to the lock position, the first connecting rod is securely connected to the second connecting rod. Moreover, when the switch is operated to the unlocked position, the first connecting rod and the second connecting rod are rotatable relative to each other through the rotary device.

In some embodiments, the multi-connecting rod assembly includes four rotary devices. At least two rotary devices are rotatable relative to the body to change the position of the rotary devices relative to the body.

In some embodiments, the hand-push lawn care vehicle further includes a grass collector. The grass collector is disposed at the rear end of the body.

In some embodiments, the first connecting rod is connected to the hand grip, and the first connecting rod connects the second connecting rod and the hand grip. Moreover, the first connecting rod includes two connecting rods connecting two ends of the hand grip, and a first plane is defined to be parallel to the two connecting rods. When the switch is in the unlocked position, the first plane is configured to pass through the grass collector.

### BRIEF DESCRIPTION OF DRAWINGS

FIG. 1 is a perspective view illustrating the structure of a walking work apparatus according to an embodiment of the present disclosure.
FIG. 2 is a plan view of the walking work apparatus of FIG. 1 in an unfolded state.
FIG. 3 is a plan view of the walking work apparatus of FIG. 1 in a folded state.
FIG. 4 is a view illustrating the structure of the handle of the walking work apparatus of FIG. 1.
FIG. 5 is a view illustrating the internal structure of the handle of the walking work apparatus of FIG. 4.
FIG. 6 is a perspective view of the structure of FIG. 5.
FIG. 7 is another perspective view of the structure of FIG. 5.
FIG. 8 is a perspective view of the handle shown in FIG. 4 without a first connecting rod and a second connecting rod.

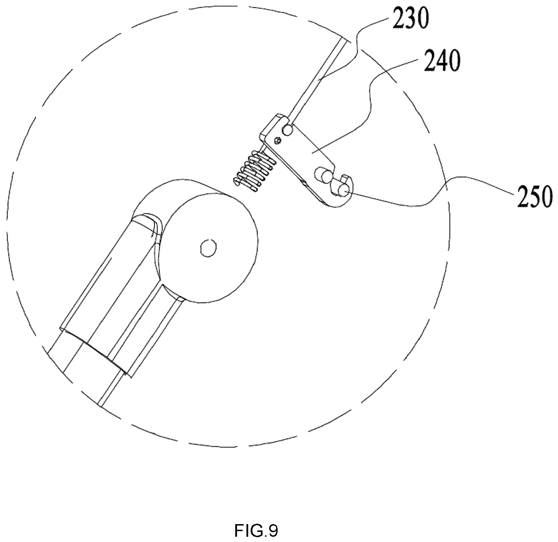

FIG. 9 is an enlarged view of a part of the structure in FIG. 8.

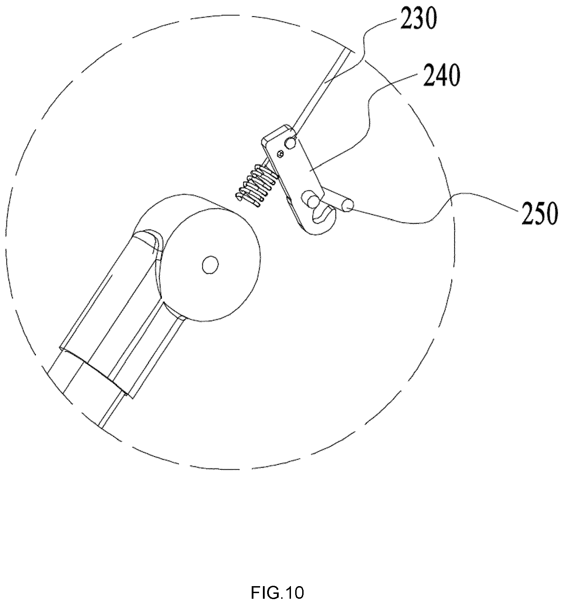

FIG. 10 is a view of the structure shown in FIG. 9 when a connection hook is disengaged from a connection pin.

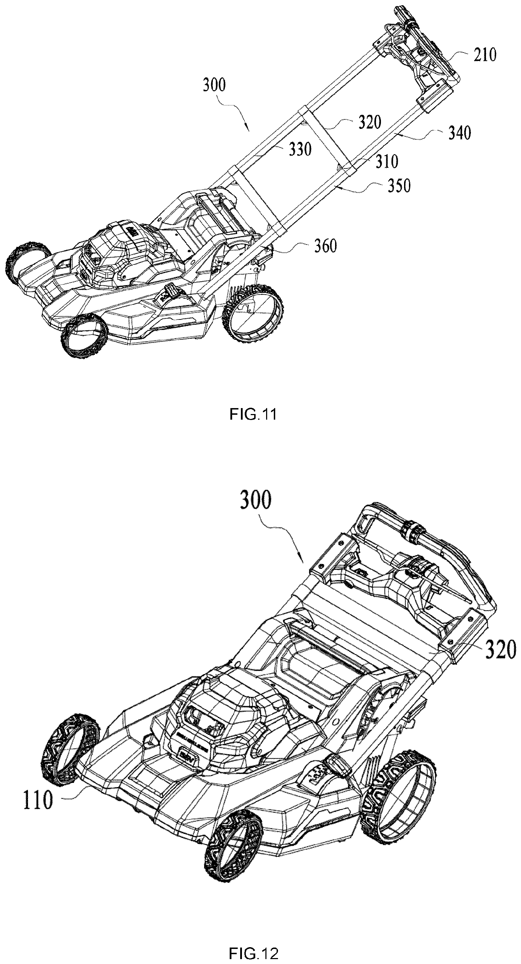

FIG. 11 is a view illustrating the structure of a walking work apparatus according to an embodiment of the present disclosure, where the handle is in an extended state.
FIG. 12 is a view illustrating the structure of the walking work apparatus of FIG. 11, where the handle is in a retracted state.

### DETAILED DESCRIPTION

The present disclosure is described below in detail in conjunction with drawings and embodiments.

The present disclosure provides a walking work apparatus 500 which can walk and work outdoors. The walking work apparatus 500 may be, for example, a hand-push lawn care vehicle or a snowplow.

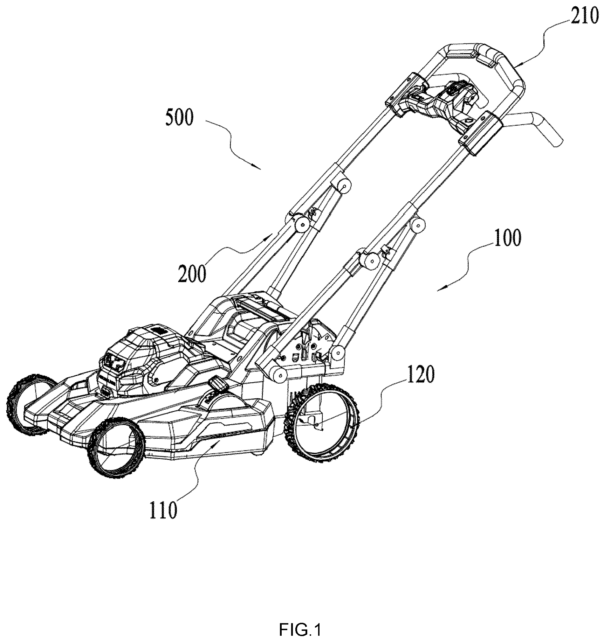

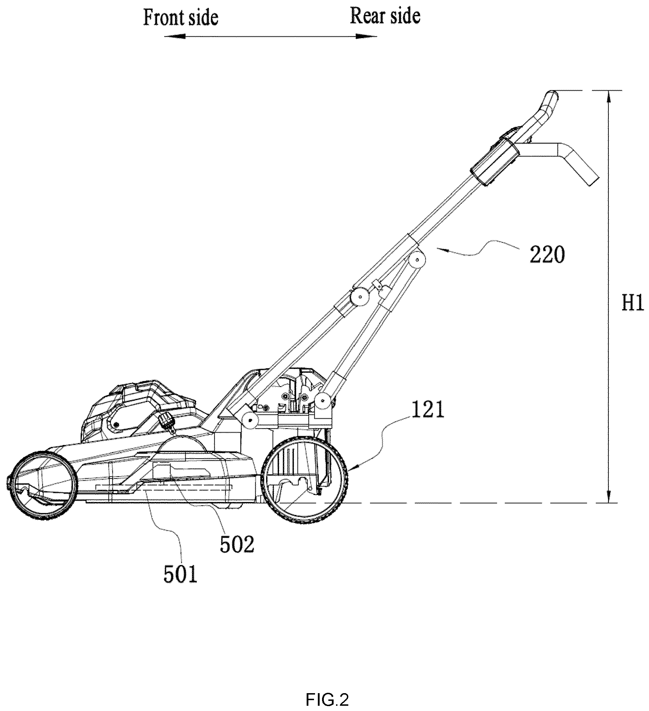

In an embodiment of the present disclosure, referring to FIG. 1 and FIG. 2, the walking work apparatus 500 includes a housing and a walking wheel set 120. The walking wheel set 120 is connected to the housing to support the housing. Moreover, the walking wheel set 120 includes a walking wheel 121 for making the walking work apparatus 500 walk. The walking work apparatus 500 includes a function assembly 501 configured to implement a tool function and a drive motor 502 configured to drive the function assembly 501. The walking work apparatus 500 further includes a handle 200. The handle 200 is connected to a body 110 and configured to push the body 110 to walk. A user pushes the handle 200 to drive the walking wheel 121 to rotate, thereby pushing the walking work apparatus 500 to walk. Since the walking work apparatus 500, such as a hand-push lawn care vehicle or a snowplow, is used for working on vegetation or snow on the ground, the body 110 and function assembly 501 of the walking work apparatus 500 are disposed close to the ground. Thus, the distance between the upper end of the handle 200 and the body 110 is relatively large, thereby making it easier for a user to stand upright when the user pushes the walking work apparatus 500 to walk. The overall size of the walking work apparatus 500 is large, not conducive to the storage and transportation of the walking work apparatus 500.

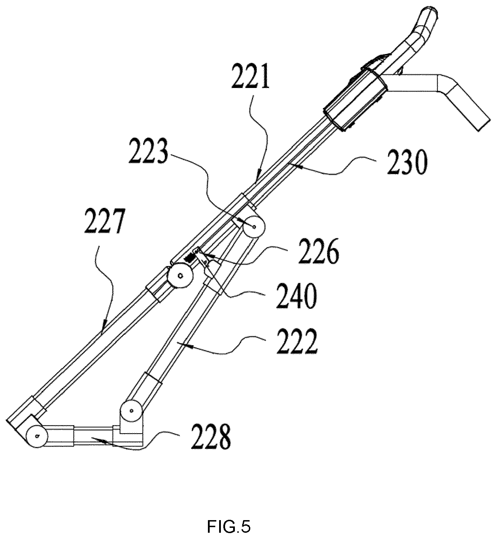

Referring to FIGS. 1 to 5, the handle 200 includes a hand grip 210. The hand grip 210 is configured to be held by a user. A multi-connecting rod assembly 220 connects the hand grip 210 and the body 110. Moreover, the multi-connecting rod assembly 220 includes at least a first connecting rod 221, a second connecting rod 222 and a rotary device 223 connecting the first connecting rod 221 and the second connecting rod 222. The handle 200 further includes a switch 224. The switch 224 has a lock state and an unlocked state. When the switch 224 is in the lock state, the first connecting rod 221 is fixed relative to the second connecting rod 222. Moreover, when the switch 224 is in the unlocked state, the first connecting rod 221 is movable relative to the second connecting rod 222. The switch 224 is configured to be operated to a lock position and an unlocked position. When the switch 224 is operated to the lock position, the first connecting rod 221 is securely connected to the second connecting rod 222. Moreover, when the switch 224 is operated to the unlocked position, the first connecting rod 221 and the second connecting rod 222 are rotatable relative to each other through the rotary device 223. Thus, the handle 200 can be switched to an unfolded state and a folded state. When the handle 200 is in the unfolded state, the hand grip 210 can be adjusted to the highest position where the hand grip 210 can reach, thereby making it easier for a user to stand and hold the handle 200. When the handle 200 is in the folded state, the handle 200 can be folded until at least part of the connecting rods attaches, or the angle between two adjacent connecting rods is less than or equal to 15 degrees. When the handle 200 is in the unfolded state and the switch 224 is operated to the lock position, the handle 200 is maintained in the unfolded state. At this time, the first connecting rod 221 and the second connecting rod 222 are not rotatable so that the handle 200 is not foldable. When a user operates the switch 224 to the unlocked position, the first connecting rod 221 and the second connecting rod 222 are rotatable so that the user can push the hand grip 210 or the multi-connecting rod assembly 220 to switch the handle 200 from the unfolded state to the folded state.

Referring to FIGS. 2 to 5, the multi-connecting rod assembly 220 is a four-connecting rod mechanism. The four-connecting rod mechanism includes four connecting rods. Four connecting rods are rotatably connected. The first connecting rod 221 is connected to the hand grip 210. The first connecting rod 221 connects the second connecting rod 222 and the hand grip 210. The first connecting rod 221 includes two connecting rods connecting two ends of the hand grip 210. The walking work apparatus 500 further includes a lock member 225. The lock member 225 is configured to lock the switch 224 in the lock position. The switch 224 is a button disposed on the hand grip 210. When the switch 224 is not pressed, the switch 224 is in the lock position, and the lock member 225 abuts the switch 224 so that the switch 224 cannot be pressed. When a user needs to switch the switch 224 to the unlocked position, the user needs to first press the lock member 225 to unlock the switch 224 locked by lock member 225 and then press the switch 224 to make the switch 224 in the unlocked position. Since the user holds the hand grip 210 to operate the walking work apparatus 500, the switch 224 is easy to be touched. The lock member 225 is configured to lock the switch 224 so that the user is prevented from accidentally touching the switch 224 to cause the handle 200 to unlock and fold out of shape when pushing the walking work apparatus 500.

The rotary device 223 is a hinge point. The rotary device 223 includes a rotation shaft and a connection hole. The rotation shaft is placed in the connection hole so that the first connecting rod 221 and the second connecting rod 222 are rotatable relative to each other. The multi-connecting rod assembly 220 includes four rotary devices. At least two rotary devices 223 are rotatable relative to the body 110 to change the position of the rotary devices 223 relative to the body 110. Optionally, the multi-connecting rod assembly 220 is a four-connecting rod mechanism including the first connecting rod 221, the second connecting rod 222, a third connecting rod 227 and a fourth connecting rod 228. Rotary devices 223 are disposed between the first connecting rod 221, the second connecting rod 222, the third connecting rod 227 and the fourth connecting rod 228. The first connecting rod 221 includes a first end 221a connected to the hand grip 210 and s second end 221b rotatably connected to the third connecting rod 227, the second connecting rod 222 includes a third end 222a rotatably connected to a portion of the first connecting rod 221 between the first end 221a and the second end 221b and a fourth end 222b rotatably connected to the fourth connecting rod 228, the third connecting rod 227 includes a fifth end 227a rotatably connected to the second end 221b of the first connecting rod 221 and a sixth end 227b rotatably connected to the fourth connecting rod 228, the fourth connecting rod 228 includes a seventh end 228a rotatably connected to the fourth end 222b of the second connecting rod 222 and a eighth end 228b rotatably connected to the sixth end 227b of the third connecting rod 227. In this example, the fourth connecting rod 228 is fixedly connected to the body 110. In other examples, the fourth connecting rod is integrally formed with the body, that is to say, and the body may be used as the fourth connecting rod. Therefore, a user can adjust the form of the multi-connecting rod assembly 220 by operating the four-connecting rod mechanism to rotate relative to each other. Optionally, the multi-connecting rod assembly 220 may be a five-connecting rod structure or more, without limiting the walking work apparatus 500 proposed by the present disclosure. Optionally, the multi-connecting rod assembly 220 is a three-connecting rod mechanism. In this mechanism, rotation shafts of two rotary devices 223 are securely connected to the body 110. Moreover, the rotary devices 223 are rotatable relative to the body 110.

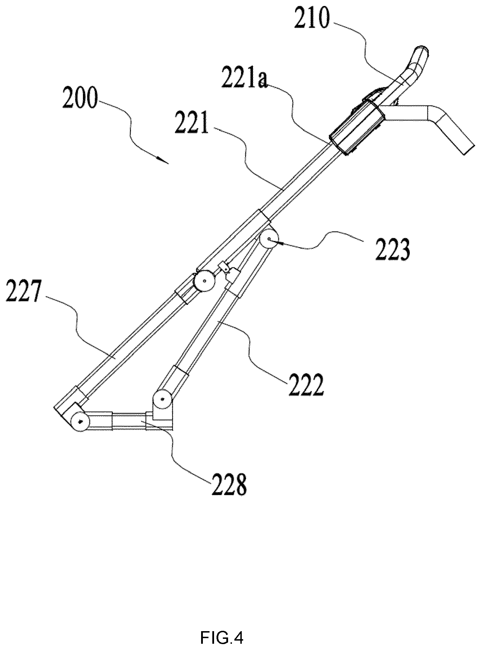

Referring to FIGS. 4 to 6, the handle 200 includes a connection member 226. The connection member 226 connects the switch 224 and the second connecting rod 222. When the switch 224 is in the lock position, the connection member 226 abuts the second connecting rod 222 to stop the rotary device 223 from rotating. Moreover, when the switch 224 is in the unlocked position, the connection member 226 releases the rotary device 223 from being stopped. Specifically, the connection member 226 includes a screw rod 230 and a connection hook 240. The connection hook 240 is disposed at the front end of the screw rod 230. The screw rod 230 is disposed inside the first connecting rod 221. Alternatively, the screw rod 230 is connected to the first connecting rod 221, and the rear end of the screw rod 230 is connected to the switch 224. The second connecting rod 222 is provided with the connection pin 250. The connection hook 240 can be hooked to the connection pin 250 so that the connection member 226 abuts the second connecting rod 222, thereby fixedly connecting the first connecting rod 221 and the second connecting rod 222 through the connection member 226. Although the rotary device 223 is disposed between the first connecting rod 221 and the second connecting rod 222, the first connecting rod 221 and the second connecting rod 222 are not rotatable at this time by the stop of the connection member 226. Thus, the first connecting rod 221, the second connecting rod 222, the third connecting rod 227 and the fourth connecting rod 228 are locked from relative rotation to lock the handle 200 in the unfolded state, thereby making it easier for a user to push the walking work apparatus 500 to walk. When a user needs to fold the handle 200, the lock member 225 is firstly pressed to cancel the stop to the switch 224. Then the switch 224 is pressed to drive the screw rod 230 to move. Thus, the connection hook 240 rotates away from the connection pin 250, thereby releasing the fixed connection between the first connecting rod 221 and the second connecting rod 222. At this time, the first connecting rod 221 and the second connecting rod 222 can be rotated relative to each other through the rotary device 223. Moreover, among the first connecting rod 221, the second connecting rod 222, the third connecting rod 227 and the fourth connecting rod 228, each two adjacent connecting rods can rotate relative to each other. The connection member 226 further includes an elastic member. The elastic member connects the connection hook 240 so that the connection hook can be reset and connected to the connection pin 250.

The first connecting rod 221 includes two connecting rods connecting two ends of the hand grip 210. A first plane 101 is defined to be parallel to the two connecting rods. When the switch 224 is in the unlocked position, the first plane 101 can pass through the body 110 so that the handle 200 is folded. Thus, the overall size of the walking work apparatus 500 is small, facilitating the storage and transportation of the walking work apparatus 500. The walking work apparatus 500 can be pushed to walk along a first direction. When the handle 200 is in the unfolded state, the included angle formed by the first plane 101 and the straight line in which the first direction is located is greater than or equal to 30 degrees and less than or equal to 90 degrees. The second connecting rod 222, the third connecting rod 227 and the fourth connecting rod 228 are also provided with two opposite connecting rods. Therefore, the handle 200 can be understood as a symmetrical structure. The connecting rod mechanism can be rotated to a folded state. At this time, the included angle between the first plane 101 and the bottom surface of the body 110 is less than or equal to 30 degrees.

The included angle between the first connecting rod 221 and the second connecting rod 222 is greater than or equal to 5 degrees and less than or equal to 175 degrees. In some embodiments, the included angle between the first connecting rod 221 and the second connecting rod 222 is greater than or equal to 15 degrees and less than or equal to 160 degrees. Referring to FIG. 2, when the handle 200 is in the unfolded state, a distance H1 between the hand grip 210 and the bottom surface of the body 110 is greater than or equal to 800 mm and less than or equal to 1200 mm. When the handle 200 is in the folded state, the distance between the hand grip 210 and the highest point of the body 110 is less than or equal to 300 mm.

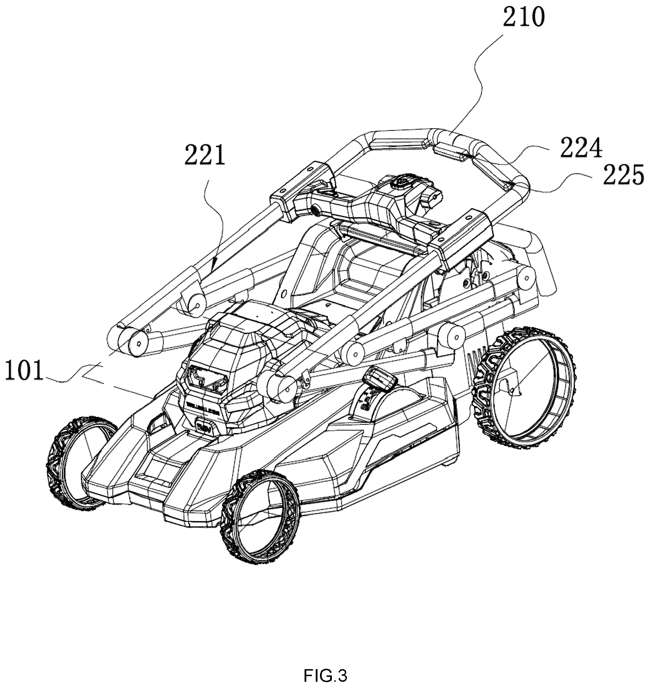

Referring to FIG. 1, when the handle 200 is in the folded state, the hand grip 210 is located at an upper side of a rear end of the body 110. Referring to the FIGS. 1 and 3, when the handle 200 is switched from the unfolded state to the folded state, the position of the rotary device 223 changes. The hand grip 210 is disposed at a rear side of the first connecting rod 221 when the handle200 is switched from the unfolded state to the folded state

Referring to FIG. 1, the walking work apparatus 500 is a hand-push lawn care vehicle by way of example. The hand-push lawn care vehicle is an electric machine that uses electrical energy as the power source. The hand-push lawn care vehicle includes the housing and the walking wheel set 120. The walking wheel set 120 is connected to the housing to support the housing. Moreover, the walking wheel set 120 includes the walking wheel 121 to enable the hand-push lawn care vehicle to walk. The hand-push lawn care vehicle further includes a seat and the drive motor. The seat is mounted to the housing and for a user to sit. When the walking work apparatus 500 is the hand-push lawn care vehicle, the function assembly is a mowing assembly. The mowing assembly includes a mowing element for mowing. The mowing element may be a mowing blade. The drive motor is configured to drive the mowing assembly to perform mowing.

The hand-push lawn care vehicle further includes a grass collector. The grass collector is disposed at the rear end of the body 110. The first connecting rod 221 is connected to the hand grip 210, and the first connecting rod 221 connects the second connecting rod 222 and the hand grip 210. Moreover, the first connecting rod 221 includes two connecting rods connecting two ends of the hand grip 210. The first plane 101 is defined to be parallel to the two connecting rods. When the switch 224 is in the unlocked position, the first plane 101 can pass through the body 110 and the grass basket. Therefore, whether the handle 200 is in the unfolded state or the folded state, the handle 200 can avoid the grass collector disposed at the rear end of the body 110.

Thus, the hand-push lawn care vehicle is convenient for a user to use, and the handle 200 can be folded arbitrarily.

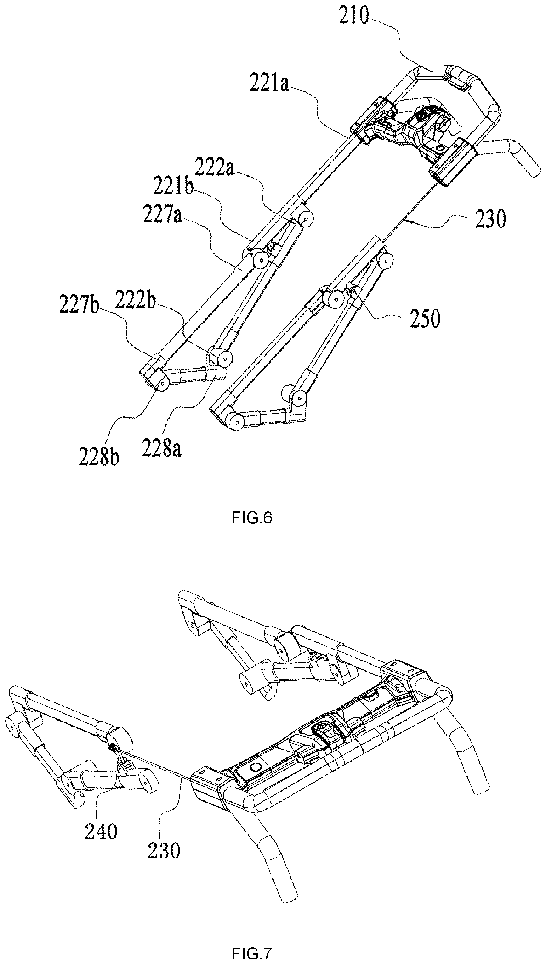

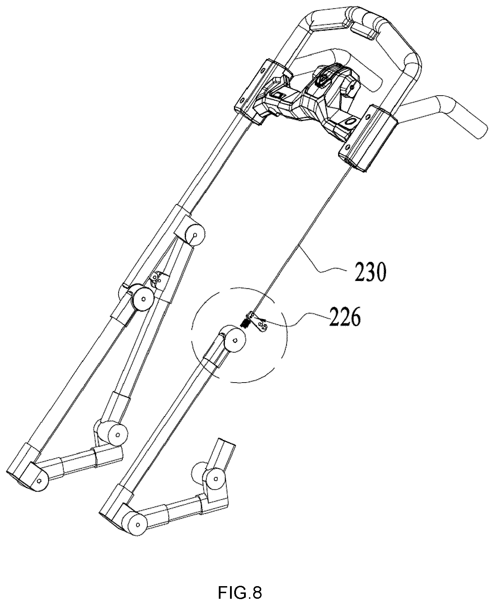

In a second embodiment of the present disclosure, referring to FIG. 7 and FIG. 8, a handle 300 is provided. The handle 300 is configured to be telescopic. In this embodiment, the handle 300 includes a plurality of telescopic portions. The plurality of telescopic portions are in the same plane. The plurality of telescopic portions include lock devices 310, crosswise braces 320 and lengthwise braces 330. Two lengthwise braces 330 are provided. The two lengthwise braces are disposed opposite to each other. The handle 200 includes a hand grip 210. Two ends of the hand grip 210 are connected to two lengthwise braces 330 in a one-to-one manner. The crosswise braces 320 are connected between the lengthwise braces 330. The crosswise braces 320 are substantially perpendicular to the lengthwise braces 330. In some embodiments, the handle 300 includes a first telescopic portion 340, a second telescopic portion 350 and a third telescopic portion 360. The first telescopic portion 340 is disposed above the second telescopic portion 350. The third telescopic portion 360 is disposed below the second telescopic portion 350. Three telescopic portions are in the same plane. The lengthwise braces 330 are hollow. The lengthwise brace 330 of the first telescopic portion 340 can be accommodated in the lengthwise brace 330 of the second telescopic portion 350. The lengthwise brace 330 of the second telescopic portion 350 can be accommodated in the lengthwise brace 330 of the third telescopic portion 360. The lock devices 310 are disposed below the crosswise braces 320 and on all of the telescopic portions. When the lock devices 310 are not pressed, the lock devices 310 lock the lengthwise braces 330 so that the lengthwise braces 330 are not telescopic. At this time, the handle 300 is in the extended state, and there is a certain gap between the crosswise braces 320. When a user operates the lock device 310 of the third telescopic portion 360, the lock device 310 is unlocked, and the lengthwise brace 330 of the second telescopic portion 350 enters the inside of the lengthwise brace 330 of the third telescopic portion 360. At this time, the crosswise brace 320 of the second telescopic portion 350 abuts the crosswise brace 320 of the third telescopic portion 360, and the crosswise brace 320 of the third telescopic portion 360 unlocks the lock device 310 of the second telescopic portion 350. In this manner, the lengthwise brace 330 of the first telescopic portion 340 enters the lengthwise brace 330 of the second telescopic portion 350 so that the remaining telescopic portion of the handle 300 automatically retracts, thereby facilitating use. In some embodiments, the handle 300 can be separated from the body 110 to serve as a ladder.

In the description of the present disclosure, it is to be noted that orientations or position relations indicated by terms such as "center", "upper", "lower", "left", "right", "vertical", "horizontal", "in", "out" are orientations or position relations based on the drawings. These orientations or position relations are intended only to facilitate the description of the present disclosure and simplify the description and not to indicate or imply that a device or element referred to must have such specific orientations or must be configured or operated in such specific orientations. Thus, these orientations or position relations are not to be construed as limiting the present disclosure. In addition, terms such as "first" and "second" are used merely for the purpose of description and are not to be construed as indicating or implying relative importance.

In the description of the present disclosure, it is to be noted that terms "mounted", "joined" and "connected" are to be understood in a broad sense unless otherwise expressly specified and limited. For example, the term "connected" may refer to "securely connected" or "detachably connected", may refer to "mechanically connected" or "electrically connected" or may refer to "connected directly", "connected indirectly through an intermediary" or "connected inside two components". For those of ordinary skill in the art, specific meanings of the preceding terms in the present disclosure may be understood based on specific situations.

The preceding embodiments illustrate only the basic principles and features of the present disclosure. The present disclosure is not limited by the preceding embodiments. Various modifications and variations made without departing from the spirit and scope of the present disclosure fall within the scope of the present disclosure. The scope of the present disclosure is defined by the appended claims and their equivalents.

## Claims

1. A walking work apparatus (500), comprising:
a body (110);
a walking wheel set (120) comprising a walking wheel (121) supporting the body;
a function assembly (501) configured to implement a function of the walking work apparatus;
a drive motor (502) configured to drive the function assembly to operate; and
a handle (200) connected to the body and configured to push the body to walk,
wherein the handle comprises:
a hand grip (210) configured to be held by a user;
a multi-connecting rod assembly (220) connecting the hand grip and the body, wherein the multi-connecting rod assembly comprises at least a first connecting rod (221), a second connecting rod (222) and a rotary device (223) connecting the first connecting rod and the second connecting rod.

2. The walking work apparatus according to claim 1, wherein the handle further comprises a switch (224) configured to be operated to a lock position and an unlocked position, wherein when the switch is operated to the lock position, the first connecting rod is securely connected to the second connecting rod, and when the switch is operated to the unlocked position, the first connecting rod and the second connecting rod are rotatable relative to each other through the rotary device.

3. The walking work apparatus according to claim 1, wherein the multi-connecting rod assembly comprises four rotary devices.

4. The walking work apparatus according to claim 3, wherein at least two of the four rotary devices are rotatable relative to the body to change a position of the rotary device relative to the body.

5. The walking work apparatus according to claim 2, further comprising a lock member (225), wherein the lock member is configured to lock the switch in the lock position.

6. The walking work apparatus according to claim 2, wherein the handle comprises a connection member (226) and the connection member connects the switch and the second connecting rod.

7. The walking work apparatus according to claim 6, wherein the connection member abuts the second connecting rod to stop the rotary device from rotating when the switch is in the lock position, and the connection member releases the rotary device from being stopped when the switch is in the unlocked position.

8. The walking work apparatus according to claim 1, wherein the first connecting rod connects the second connecting rod and the hand grip.

9. The walking work apparatus according to claim 8, wherein the first connecting rod comprises two connecting rods connecting two ends of the hand grip.

10. The walking work apparatus according to claim 9, wherein a first plane (101) is defined to be parallel to the two connecting rods, wherein when the switch is in the unlocked position, the handle is configured to rotate to a folded state in which an included angle between the first plane and a bottom surface of the body is greater than or equal to 0 degrees and less than or equal to 30 degrees.

11. The walking work apparatus according to claim 1, wherein an included angle between the first connecting rod and the second connecting rod is greater than or equal to 5 degrees and less than or equal to 175 degrees.

12. The walking work apparatus according to claim 11, wherein the included angle between the first connecting rod and the second connecting rod is greater than or equal to 15 degrees and less than or equal to 160 degrees.

13. The walking work apparatus according to claim 1, wherein the handle is configured to be switched to an unfolded state and a folded state, and a distance between the hand grip and a bottom surface of the body is greater than or equal to 800 mm and less than or equal to 1200 mm when the handle is in the unfolded state.

14. The walking work apparatus according to claim 13, wherein the handle is configured to be switched to an unfolded state and a folded state, and the hand grip is disposed at an upper side of a rear end of the body when the handle is in the folded state.

15. The walking work apparatus according to claim 1, wherein the multi-connecting rod assembly further comprises a third connecting rod (227) and a fourth connecting rod (228).
